# EUROPÄISCHE PATENTANMELDUNG

(11) **EP 1 168 707 A2**
(43) Veröffentlichungstag der Anmeldung: **02.01.2002**
(21) Anmeldenummer: 01106065.4
(22) Anmeldetag: 12.03.2001
(51) Int. Cl.: H04L 7/10

(54) **Verfahren zur schnellen Synchronisation von Blockcodierern und -decodierern bei einer blockcodierten, bidirektionalen Datenübertragung über in einen bitorientierten Kanal**

(30) Priorität: 21.06.2000 DE 10030393
(71) Anmelder: SIEMENS AKTIENGESELLSCHAFT, 80333 München (DE)
(72) Erfinder: Graf, Jürgen, 89143 Blaubeuren (DE)

(57) **Zusammenfassung**

Verfahren zur Synchronisation von Übertragungseinrichtungen bei einer blockcodierten, bidirektionalen Datenübertragung über in einen bitorientierten Kanal, mit sende - und empfangsseitig angeordneten Übertragungseinrichtungen,
dadurch gekennzeichnet,
daß beide Übertragungseinrichtungen zu Beginn der Datenübertragung einen asynchronen Synchronisationszustand einnehmen und jeweils der Gegenseite erste Flags (ASYNC) übermitteln, daß jede der Übertragungseinrichtungen sich zuerst auf die empfangenen ersten Flags (ASYNC) und/oder weitere Flags (SYNC) aufsynchronisieren,
daß falls eine der beiden Übertragungseinrichtungen sich erfolgreich aufsynchronisiert hat, der Gegenseite solange die weiteren Flags (SYNC) übermittelt werden, bis von der Gegenseite keine ersten Flags (ASYNC) mehr empfangen werden und somit bei beiden Übertragungseinrichtungen Synchronität erreicht wurde, und daraufhin mit dem Senden der Datenübertragung begonnen wird.

## Beschreibung

Die Erfindung betrifft ein Verfahren gemäß dem Oberbegriff von Patentanspruch 1.

Bei einer synchronen Übertragung binärer Daten über einen bitorientierten Kanal muß empfangsseitig der Takt zurückgewonnen werden. Erst dadurch ist der Empfänger in der Lage, die Daten wieder richtig zu erkennen. Unter einem bitorientierten Kanal wird dabei die Übertragung von Daten ohne eine übergeordnete Rahmenstruktur verstanden. Damit die Taktrückgewinnung möglich ist, muß der Sender eine genügend hohe Flankendichte (Übergänge von 0 auf 1 und umgekehrt) garantieren. Diese wird jedoch durch den physikalischen Zustand der Übertragungsstrecke beeinflußt. Die Daten müssen daher an die Übertragungsgegebenheiten angepaßt werden. Zu diesem Zweck werden Blockcodierer verwendet. Sendeseitig werden aneinandergereihte codierte Blöcke gleicher Länge gesendet, die empfangsseitig wieder decodiert werden. Eine Decodierung ist aber nur möglich, wenn Blockgrenzen sicher erkannt werden. Der empfangende Decoder muß also auf die Blockgrenzen synchronisiert werden.

In Netzen mit Ersatzschaltung muß diese Synchronisation möglichst schnell vorgenommen werden, damit möglichst wenig Daten verloren gehen.

Bisherigen Lösungsverfahren haben dan Nachteil, daß die Dynamik des Übertragungsvorganges beeinträchtigt ist.

Der Erfindung liegt die Aufgabe zugrunde, einen Weg aufzuzeigen, wie eine schnelle Synchronisation auf Blockgrenzen mit einfachen Mitteln vorgenommen werden kann.

Die Erfindung wird ausgehend vom Oberbegriff von Patentanspruch 1 durch die im kennzeichnenden Teil angegebenen Merkmale gelöst.

Vorteilhaft an der Erfindung ist, daß eine schnelle Synchronisation von Blockcodiersystemen gegeben ist. Das erfindungsgemäße Verfahren ist auf jeden Blockcode mit Blocklängen größer 1 anwendbar. Durch die Verwendung der beiden Flags als Synchronisationshilfe ist es möglich, der Gegenseite den eigenen Synchronisationszustand mitzuteilen, selbst wenn diese noch nicht synchronisiert ist. Der Synchronisationsvorgang wird dadurch nicht gestört. Dadurch kann sofort erkannt werden, daß die Gegenseite synchron ist, und mit der Nutzdatenübertragung begonnen werden.

Vorteilhafte Weiterbildungen der Erfindung sind in den Unteransprüchen vorgesehen.

Die Erfindung wird im folgenden anhand eines figürlich dargestellten Ausführungsbeispieles näher erläutert.

Es zeigen:
- Fig 1: ein Zustandsdiagramm des Synchronisationsverfahrens
- Fig 2: eine Lösung mit einer Korrelation vor dem Decoder
- Fig 3: eine Lösung mit einer Korrelation ohne Versatzerkennung vor dem Decoder
- Fig 4: eine Lösung mit einer Synchronisation nach dem Decoder

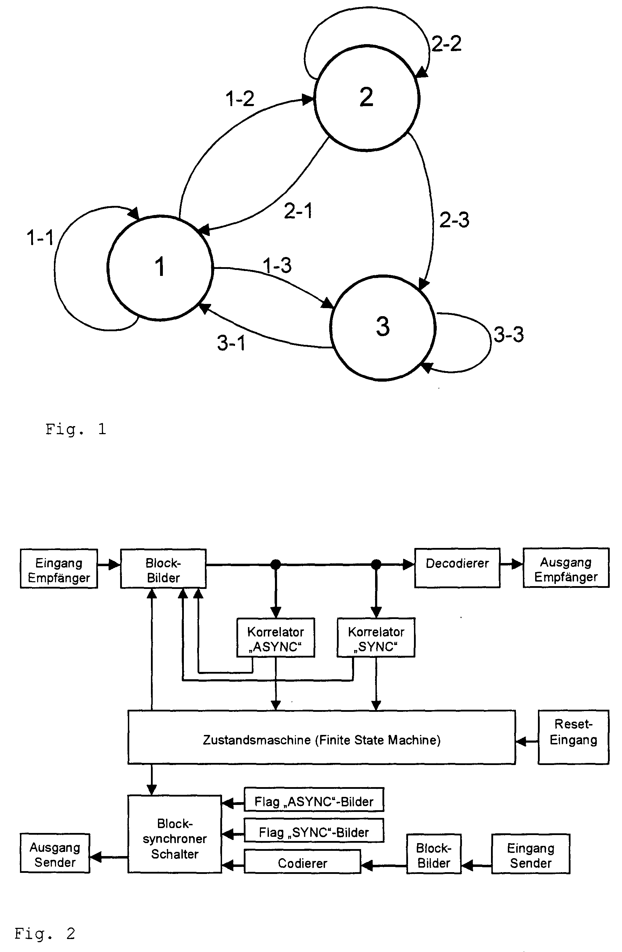

Fig. 1 zeigt ein Zustandsdiagramm des Synchronisationsverfahrens. Als Voraussetzung wird eine bidirektionale Übertragungsstrecke betrachtet. Die hierüber zu übertragenden, codierten Blöcke sollen stets die gleiche Länge (gleiche Anzahl Bits) aufweisen und nahtlos aneinandergereiht sein. Dies bedeutet, daß die Blockanfangsgrenzen immer im gleichen Abstand zueinander angeordnet sind. Daher ist es vollkommen ausreichend, den Blockdecoder des Empfängers nur einmal, nämlich zu Beginn der Datenübertragung zu synchronisieren.

Zur Durchführung der Synchronisation werden Synchronisationshilfen in Form von aneinandergereihten Synchronisationsflags gesendet.Anhand dieser Flags können empfangsseitig die Blockgrenzen erkannt werden. Die Übertragung der eigentlichen Nutzdaten, die als blockcodierte Datenblöcke gesendet werden, beginnt erst dann, wenn erkannt wird, daß die Gegenseite sicher blocksynchron ist. Der Synchronisationsstatus wird der jeweiligen Gegenseite durch die Synchronisationsflags mitgeteilt. Das Verfahren verwendet dazu 2 unterschiedliche Synchronisationsflags: ein ASYNC-Flag und ein SYNC-Flag. Mit dem ASYNC-Flag wird der Gegenseite mitgeteilt, daß eine eigene Synchronität zu den Blockgrenzen noch nicht gegeben ist. Mit dem SYNC-Flag wird mitgeteilt, daß eine eigene Synchronität zu den Blockgrenzen gegeben ist. Hierzu müssen beide Flags folgende Eigenschaften erfüllen:
1. Es darf keine Periode innerhalb eines Flags erscheinen.
2. Beide Flags müssen gleiche Länge aufweisen.
3. Ein Flag hat die Länge eines zu codierenden Datenblockes (oder ein Vielfaches davon) aufzuweisen.
4. Werden Flags periodisch aneinandergereiht, darf in der entstehenden Bitfolge keine Sequenz enthalten sein, die dem anderen Flag entspricht.
5. Beim Senden aneinandergereihter Flags muß eine genügend hohe Flankendichte vorhanden sein.

Zu Beginn des Synchronisationsvorgangs, werden beide Codiersysteme durch einen Rücksetzimpuls (Reset) in den Anfangszustand 1 ("Asynchron") gesetzt. Hierbei wird unter einem Codiersystem einer der in Figuren 2-4 aufgezeigten Anordnungen verstanden. Jedes der beiden Codiersysteme arbeitet nach dem in Fig. 1 aufgezeigten Zustandsdiagramm.

### Zustand 1 (Codiersystem ist asynchron):

Es werden aneinandergereihte ASYNC-Flags gesendet. Dabei wird versucht die Blockgrenzen anhand der ankommenden Synchronisationsflags zu erkennen und sich zu synchronisieren.

### Zustand 2 (Das Codiersystem ist synchron und die Gegenseite asynchron):

Es werden aneinandergereihte SYNC-Flags gesendet. Die SYNC-Flags werden ohne Versatz zu den vorher gesendeten ASYNC-Flags gesendet. Das heißt, für die Gegenseite verschiebt sich die periodische Lage der Blockgrenzen nicht.

### Zustand 3 (Beide Codiersysteme sind synchron):

Es werden keine Synchronisationsflags mehr gesendet sondern aneinandergereihte codierte Blöcke (Nutzdaten). Die codierten Blöcke werden ohne Versatz zu den vorher gesendeten ASYNC-Flags oder SYNC-Flags gesendet. Das heißt,für die Gegenseite verschiebt sich die periodische Lage der Blockgrenzen nicht.

### Übergang 1-1:

Die Blockgrenzen wurden nicht sicher erkannt (Die Blocksynchronität ist noch nicht hergestellt) oder es wurde ein Reset von externer Stelle generiert.

### Übergang 1-2:

Die Blockgrenzen wurden sicher erkannt. Typischerweise muß eine hinreichende Anzahl (z.B. 3-10) aufeinanderfolgender, fehlerfreier ASYNC-Flags korrekt empfangen werden. Die Blocksynchronität ist hergestellt.

### Übergang 1-3:

Die Blockgrenzen wurden sicher erkannt. Typischerweise muß eine hinreichende Anzahl (z.B. 3 - 10) aufeinanderfolgender, fehlerfreier ASYNC-Flags oder SYNC-Flags korrekt empfangen werden. Die Blocksynchronität ist hergestellt. Zumindest zuletzt muß eine hinreichende Anzahl von SYNC-Flags empfangen worden sein.

### Übergang 2-2:

Der Empfang von ASYNC-Flags wurde sicher erkannt.

### Übergang 2-3:

Es wurde sicher erkannt, daß keine ASYNC-Flags mehr empfangen werden. Typischerweise wurde eine hinreichende Anzahl von ASYNC-Flags hintereinander nicht mehr empfangen (Anzahl: 3-10) .

### Übergang 2-1:

Reset wurde von externer Stelle generiert.

### Übergang 3-3:

Es wurde kein Reset von externer Stelle generiert.

### Übergang 3-1:

Reset wurde von externer Stelle generiert.

Für die Übergänge 1-2, 1-3, 2-2, 2-3, 3-3 ist Voraussetzung, daß kein Reset generiert wurde. Je nach verwendetem Blockcode kann ein Reset nicht nur von einer externer Stelle, sondern auch bei zu häufig auftretenden Codeverletzungen generiert werden.

Im folgenden sei ein Beispiel für einen Synchronisationsvorgang angeführt.

Hierbei wird davon ausgegangen, daß beide Codiersysteme einen asynchronen Synchronisationszustand einnehmen. Beide senden ASYNC-Flags. Das empfangsseitig angeordnete Codiersystem synchronisiert sich zuerst auf das empfangene ASYNC-Flag auf und sendet nun seinerseits SYNC-Flags. Das sendeseitig angeordnete Codiersystem synchronisiert sich auf das SYNC-Flag auf und beginnt mit der normalen Datenübertragung. Daraufhin empfängt das empfangsseitig angeordnete Codiersystem kein ASYNC-Flags mehr und beginnt ebenfalls mit der Datenübertragung.

Eine Weiterbildung besteht im Empfangen von ASYNC-Flags im Zustand 3. Dies führt zum Übergang in Zustand 2. Damit kann eine benötigte Synchronisationshilfe von der Gegenstelle angefordert werden. Vorraussetzung hierfür ist, daß das ASYNC-Flag im Normalbetrieb nicht vorkommen kann. Dies bedeutet, daß zumindest ein Block das Flag (Flag kann aus mehreren Blöcken bestehen) enthält, der im verwendeten Blockcode nicht vorkommt. Unterschiede zum obigen Zustandsdiagramm sind nur in dem neuen Übergang 3-2:

Übergang 3-2: Der Empfang von ASYNC-Flags wurde sicher erkannt. Dazu muß üblicherweise hinreichende Anzahl (3-10) aufeinanderfolgender, fehlerfreier ASYNC-Flags empfangen werden.

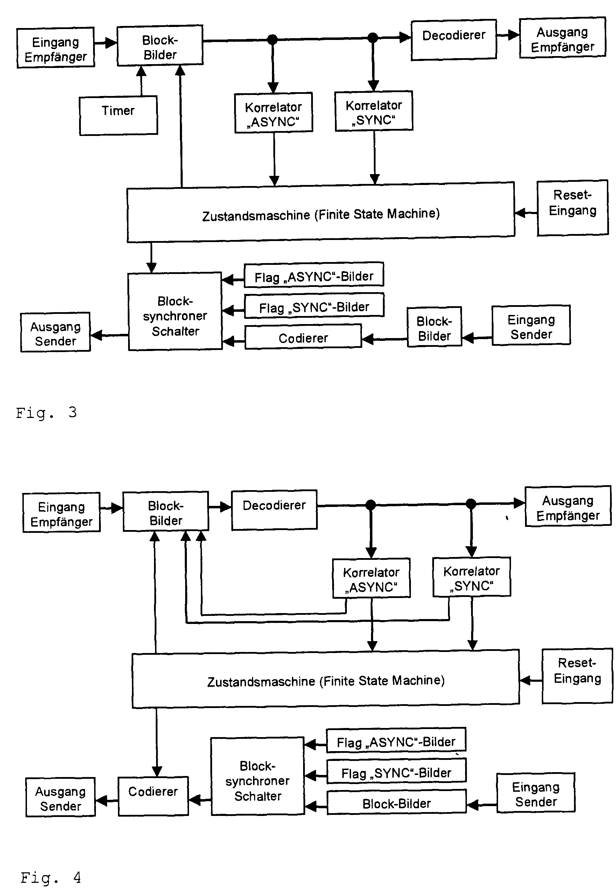

Diese Variation funktioniert nur, wenn die Flags vor dem Decoder ausgewertet werden (wie z.B. in den Vorrichtungen gemäß Fig. 2, 3).

In Fig. 2 ist eine Lösung eines Codiersystems mit einer Korrelation vor dem Decoder aufgezeigt. Hierbei ist die Aufgabe der einzelnen Blöcke:
Eingang Sender: Die zu codierende Daten werden an den Blockbilder (Sender) weitergeleitet.
Blockbilder (Sender): Am Eingang liegen Daten an. Diese können bitorientiert oder auch schon blockorientiert sein. Aus den Daten wird ein blockorientierter Datenstrom gemacht. Die Blockgröße entspricht einem der Länge eines vom nachfolgenden Codierers zu codierenden Datenblocks (Blockgröße N). Das heißt, der nachfolgende Codierer erhält zu dem Datenstrom auch Informationen zu den Blockgrenzen. Die einzelnen Blöcke haben alle dieselbe Länge
Codierer: Er erhält vom Blockbilder (Sender) die zu codierenden Datenblöcke (Blockgröße N) und codiert sie zu Blöcken mit Blockgröße M. Am Ausgang liegen blockcodierte Daten vor. Die Blockgrenzen sind dem nachfolgenden Auswahlschalter bekannt.
Flag-ASYNC-Bilder: Bildet einen Block, der die gleiche Länge eines codierten Blockes hat oder eines Vielfachen (Blockgröße k*M). Der Inhalt des Blockes besteht aus dem ASYNC-Flag. Am Ausgang wird dieser Datenblock dem Auswahlschalter (blocksynchroner Schalter) zur Verfügung gestellt. Die Flaglänge ist dem nachfolgenden Schalter bekannt.
Flag-SYNC-Bilder: Bildet einen Block, der die gleiche Länge eines codierten Blockes hat oder eines Vielfachen (Blockgröße k*M). Der Inhalt des Blockes besteht aus dem SYNC-Flag. Am Ausgang wird dieser Datenblock dem Auswahlschalter zur Verfügung gestellt. Die Flaglänge ist dem nachfolgenden Schalter bekannt.
Blocksynchroner Schalter: Die Zustandsmaschine steuert die Wahl des weiterzuleitenden Datenblockes aus den 3 Eingängen (ASYNC-Flag-Bilder, SYNC-Flag-Bilder und Codierer). Die Umschaltung erfolgt blocksynchron (Die Umschaltung erfolgt nur an den Blockgrenzen bzw- Flaggrenzen, Blockgröße M, Flaggröße k*M). Die an den Eingängen anliegenden Flags oder Blöcke werden immer komplett gesendet. Zwischen den einzelnen Blöcken gibt es keine Lücken. Die ausgewählten Blöcke werden dem "Ausgang Sender" weitergeleitet.

### Ausgang Sender: Keine weitere Funktion

Eingang Empfänger: Die Daten der Gegenseite werden empfangen und an den Blockbilder weitergereicht. Der ankommende Datenstrom ist noch bitorientiert. Er enthält allerdings aneinandergereihte, von der Gegenseite codierte Datenblöcke. Es wird allerdings keinerlei Information über die Blockgrenzen weitergegeben.

Blockbilder (Empfänger): Aus dem bitorientierten Datenstrom wird ein blockorientierter Datenstrom gemacht. Das heißt, die nachfolgenden Korrelatoren (für ASYNC und SYNC) sowie der Decodierer erhalten zu dem Datenstrom auch Informationen zu den Blockgrenzen. Die einzelnen Blöcke haben alle dieselbe Länge. Die Länge der Datenblöcke entspricht der Länge eines zu decodierenden Blockes (Blockgröße M). Der Blockbilder kann nicht selber überprüfen, ob diese zunächst willkürlich angenommenen Blockgrenzen auch stimmen. Daher hat der Blockbilder einen Setzeingang, der mit der Zustandsmaschine verbunden ist, und jeweils einen Eingang, die mit den jeweiligen Korrelatoren verbunden sind. Die Korrelatoren können aufgrund des jeweiligen Flags die richtige Lage der tatsächlichen Blockgrenzen zu dem zunächst zufälligen Blockgrenzen des Blockbilders (Versatz) ermitteln. An den beiden Eingängen liegt die Information bezüglich der tatsächlichen Blockgrenzen an. Durch den Setzeingang kann ausgewählt werden, welche der beiden übernommen werden soll. Nach dem Setzen ist der Blockbilder richtig gesetzt und die Blockgrenzen stimmen nun mit den tatsächlichen Blockgrenzen überein.

Decodierer: Am Eingang erhält er blockorientierte Daten (Blockgröße M, Daten und Information zu Blockgrenzen). Die Blockgrenzen können während des Synchronisationsvorgangs unkorrekt sein. Er decodiert die Datenblöcke und gibt die decodierte Daten an den "Ausgang Empfänger" weiter (Blockgröße N) .

Korrelator ASYNC: Am Eingang erhält er blockorientierte Datenblöcke (Daten und Information zu Blockgrenzen, Blockgröße M). Die Blockgrenzen können während des Synchronisationsvorgangs unkorrekt sein. Wenn ASYNC-Flags von der Gegenseite gesendet werden, kann der Korrelator hieraus erkennen, daß das ASYNC-Flag gesendet wird. Außerdem kann er auch anhand der "ASYNC-Flags" die genauen Blockgrenzen erkennen. Diese Information liegt am Ausgang, der mit dem Blockbilder verbunden ist vor. Der andere Ausgang ist mit der Zustandsmaschine verbunden. Damit wird der Zustandsmaschine mitgeteilt,ob das ASYNC-Flag empfangen wurde. Da ein Flag aus k Blöcken (Blockgröße M) besteht, berücksichtigt er immer k aufeinanderfolgende Blöcke.

Korrelator SYNC: Am Eingang erhält er blockorientierte Datenblöcke (Daten und Information zu Blockgrenzen, Blockgröße M). Die Blockgrenzen können während des Synchronisationsvorgangs unkorrekt sein. Wenn SYNC-Flags von der Gegenseite gesendet werden, kann der Korrelator hieraus erkennen, daß das SYNC-Flag gesendet wird. Außerdem kann er auch anhand der "SYNC-Flags" die genauen Blockgrenzen erkennen. Diese Information liegt am Ausgang, der mit dem Blockbilder verbunden ist vor. Der andere Ausgang ist mit der Zustandsmaschine verbunden. Damit wird der Zustandsmaschine mitgeteilt,ob das SYNC-Flag empfangen wurde. Da ein Flag aus k Blöcken (Blockgröße M) besteht, berücksichtigt er immer k aufeinanderfolgende Blöcke.

Zustandsmaschine: Die Zustände sind unten dargestellt. Durch einen Reset wird die sie in den Zustand 1 ("Asynchron") versetzt. In diesem Zustand wird der "Blocksynchrone Schalter" auf die Übernahme der "ASYNC-Flags eingestellt. Sobald einer der beiden Korrelatoren am Eingang meldet, daß er ein gültiges Flag (ASYNC- oder SYNC-Flag) gefunden hat, geht er in einen anderen Zustand über. Ist das gefundene Flag ein ASYNC-Flag, so geht er in den Zustand 2 ("Synchron und Gegenseite asynchron") über. Dabei wird durch die Zustandsmaschine das Richtigsetzen der Blockgrenzen ("Blockbilder Empfänger") eingeleitet. Das heißt, beim "Blockbilder Empfänger" wird das Übernehmen der Blockgrenzeninformation des ASYNC-Korrelators eingeleitet. Ist das gefundene Flag ein SYNC-Flag, so geht er in den Zustand 3 ("Beide synchron") über. Dabei wird durch die Zustandsmaschine das Richtigsetzen der Blockgrenzen ("Blockbilder Empfänger") eingeleitet.Das heißt, beim "Blockbilder Empfänger" wird das Übernehmen der Blockgrenzeninformation des SYNC-Korrelators eingeleitet.

Im Zustand 2 ("Synchron und Gegenseite asynchron") wird nun das SYNC-Flag zur Gegenseite gesendet. Das heißt, der "Blocksynchrone Schalter" bekommt ein entsprechende Information zur Auswahl des SYNC-Flags. Wird in diesem Zustand kein ASYNC-Flag mehr empfangen, so bedeutet dies, daß die Gegenseite synchron ist. Die Zustandsmaschine geht in den Zustand 3 ("Beide synchron") über. Bei diesem Übergang muß der "Blockbilder Empfänger" nicht mehr gesetzt werden, da die Blockgrenzen im Zustand 2 ("Synchron und Gegenseite asynchron") schon richtig standen. Im Zustand 3 ("Beide synchron") werden nun die codierten Daten gesendet. Das heißt, der "Blocksynchrone Schalter bekommt eine Information zur Auswahl der Daten vom Codierer. Aus diesem Zustand kommt man nur durch einen Reset in den Zustand 1 zurück. (Kommt das ASYNC-Flag im normalen Datenstrom nicht vor, kann auch der sichere Empfang von ASYNC-Flags zum Übergang in den Zustand 1 führen. Die Zustandsmaschine kann durch einen Reset aus jedem der 3 Zustände in den Ausgangszustand 1 ("Asynchron") gesetzt werden.

Reset-Eingang: Reset-Signal für Zustandsmaschine.

In Fig. 3 ist eine Lösung mit einer Korrelation ohne Versatzerkennung vor dem Decoder:
Die Unterschiede zu der in Fig. 2 aufgezeigten Anordnung sind:
   Blockbilder (Sender): Der Blockbilder bietet die Möglichkeit die Blockgrenzen um ein einzelnes Bit zu verschieben. Zwei Eingänge steuern diesen Verschiebemechanismus: Eingang von Zustandsmaschine zum Unterdrücken des Verschiebemachanismusses und der Eingang vom Timer, der den Impuls zum Verschieben eines Bits liefert.
   Timer: Liefert in regelmäßigen Zeitabständen einen Impuls zum Verschieben eines Bits an den Blockbilder (Empfänger). Die zeitlichen Abstände sind so bemessen,daß bei korrekten Blockgrenzen die Korrelatoren dies rechtzeitig vor dem nächsten Verschieben erkennen.
   Korrelator ASYNC: Keine Möglichkeit zur Erkennen des Versatzes. Ermittelt nur noch, ob die Blockgrenzen korrekt sind. Diese Information wird der Zustandsmaschine zugeleitet.
   Korrelator SYNC: Keine Möglichkeit zur Erkennen des Versatzes. Ermittelt nur noch, ob die Blockgrenzen korrekt sind. Diese Information wird der Zustandsmaschine zugeleitet.
   Zustandsmaschine: Im Zustand 1 ("Asynchron") wird der Verschiebemechanismus des Blockbilders (Empfänger) nicht unterdrückt. Im Zustand 2 ("Synchron und Gegenseite asynchron") und im Zustand 3 ("Beide synchron") wird der Verschiebemechanismus des Blockbilders (Empfänger) unterdrückt.
   In Fig. 4 ist eine Lösung mit Synchronisation nach dem Decoder aufgezeigt. Die Flags können hier frei gewählt werden, sollten allerdings nach dem Codieren die vorstehend-beschriebenen Bedingungen aufweisen.
   Codierer: Er erhält vom Blocksynchronen Schalter die die zu codierenden Datenblöcke (Blockgröße N) und codiert sie zu Blöcken mit Blockgröße M. Am Ausgang liegen blockcodierte Daten vor. Die Blockgrenzen sind dem nachfolgenden Auswahlschalter bekannt.
   Flag-ASYNC-Bilder: Bildet einen Block, der die gleiche Länge eines zu codierenden Blockes hat oder eines Vielfachen (Blockgröße k*N). Der Inhalt des Blockes besteht aus dem ASYNC-Flag. Am Ausgang wird dieser Datenblock dem Auswahlschalter zur Verfügung gestellt.
      Flag-SYNC-Bilder: Bildet einen Block, der die gleiche Länge eines vom Codierer zu codierenden Blockes hat oder eines Vielfachen (Blockgröße k*N). Der Inhalt des Blockes besteht aus dem SYNC-Flag. Am Ausgang wird dieser Datenblock dem Auswahlschalter zur Verfügung gestellt.
   Blocksynchroner Schalter: Die Zustandsmaschine steuert die Wahl des weiterzuleitenden Datenblockes aus den 3 Eingängen (ASYNC-Flag-Bilder, SYNC-Flag-Bilder und Blockbilder (Sender)). Die Umschaltung erfolgt blocksynchron. (Die Umschaltung erfolgt nur an den Blockgrenzen bzw- Flaggrenzen, Blockgröße N, Flaggröße k*N). Die an den Eingängen anliegenden Blöcke werden immer komplett gesendet. Zwischen den einzelnen Blöcken gibt es keine Lücken. Die ausgewählten Blöcke werden dem "Codierer" weitergeleitet. Er erhält blockorientierte Daten mit Blockgröße N.
   Ausgang Sender: Keine weitere Funktion
   Eingang Empfänger: Die Daten der Gegenseite werden empfangen und an den Blockbilder weitergereicht. Der ankommende Datenstrom ist noch bitorientiert. Er enthält allerdings aneinandergereihte, von der Gegenseite codierte Datenblöcke. Es wird allerdings keinerlei Information über die Blockgrenzen weitergegeben.
   Blockbilder (Empfänger): Aus dem bitorientierten Datenstrom wird ein blockorientierter Datenstrom gemacht. Das heißt, der nachfolgende Korrelatoren Decodierer erhält zu dem Datenstrom auch Informationen zu den Blockgrenzen. Die einzelnen Blöcke haben alle dieselbe Länge. Die Länge der Datenblöcke entspricht der Länge eines zu decodierenden Blockes (Blockgröße M). Der Blockbilder kann nicht selber überprüfen, ob diese zunächst willkürlich angenommenen Blockgrenzen auch stimmen. Daher hat der Blockbilder einen Setzeingang, der mit der Zustandsmaschine verbunden ist, und jeweils einen Eingang, die mit den jeweiligen Korrelatoren verbunden sind. Die Korrelatoren können aufgrund des jew. Flags die richtige Lage der tatsächlichen Blockgrenzen zu dem zunächst zufälligen Blockgrenzen des Blockbilders (Versatz) ermitteln. An den beiden Eingängen liegt die Information bezüglich der tatsächlichen Blockgrenzen an. Durch den Setzeingang kann ausgewählt werden, welche der beiden übernommen werden soll. Nach dem Setzen ist der Blockbilder richtig gesetzt und die Blockgrenzen stimmen nun mit den tatsächlichen Blockgrenzen überein.
   Decodierer: Am Eingang erhält er blockorientierte Daten (Blockgröße M, Daten und Information zu Blockgrenzen). Die Blockgrenzen können während des Synchronisationsvorgangs unkorrekt sein. Er decodiert die Datenblöcke und gibt die decodierten Daten an den "Ausgang Empfänger" und an die beiden Korrelatoren weiter (Blockgröße N).
   Korrelator ASYNC: Am Eingang erhält er blockorientierte Datenblöcke (Daten und Information zu Blockgrenzen, Blockgröße N). Die Blockgrenzen können während des Synchronisationsvorgangs unkorrekt sein. Wenn ASYNC-Flags von der Gegenseite gesendet werden, kann der Korrelator hieraus erkennen, daß das ASYNC-Flag gesendet wird. Außerdem kann er auch anhand der "ASYNC-Flags" die genauen Blockgrenzen erkennen. Diese Information liegt am Ausgang, der mit dem Blockbilder verbunden ist vor. Der andere Ausgang ist mit der Zustandsmaschine verbunden. Damit wird der Zustandsmaschine mitgeteilt, ob das ASYNC-Flag empfangen wurde. Da ein Flag aus k Blöcken (Blockgröße N) besteht, berücksichtigt er immer k aufeinanderfolgende Blöcke.
   Korrelator SYNC: Am Eingang erhält er blockorientierte Datenblöcke (Daten und Information zu Blockgrenzen, Blockgröße N). Die Blockgrenzen können während des Synchronisationsvorgangs unkorrekt sein. Wenn SYNC-Flags von der Gegenseite gesendet werden, kann der Korrelator hieraus erkennen, daß das SYNC-Flag gesendet wird. Außerdem kann er auch anhand der "SYNC-Flags" die genauen Blockgrenzen erkennen. Diese Information liegt am Ausgang, der mit dem Blockbilder verbunden ist vor. Der andere Ausgang ist mit der Zustandsmaschine verbunden. Damit wird der Zustandsmaschine mitgeteilt, ob das SYNC-Flag empfangen wurde. Da ein Flag aus k Blöcken (Blockgröße N) besteht, berücksichtigt er immer k aufeinanderfolgende Blöcke.
   Zustandsmaschine: Die Zustände sind unten dargestellt. Durch einen Reset wird die sie in den Zustand 1 ("Asynchron") versetzt. In diesem Zustand wird der "Blocksynchrone Schalter" auf die Übernahme der "ASYNC-Flags eingestellt. Sobald einer der beiden Korrelatoren am Eingang meldet, daß er ein gültiges Flag (ASYNC- oder SYNC-Flag) gefunden hat, geht er in einen anderen Zustand über. Ist das gefundene Flag ein ASYNC-Flag, so geht er in den Zustand 2 ("Synchron und Gegenseite asynchron")über. Dabei wird durch die Zustandsmaschinen das Richtigsetzen der Blockgrenzen ("Blockbilder Empfänger") eingeleitet. Das heißt, beim "Blockbilder Empfänger" wird das Übernehmen der Blockgrenzeninformation des ASYNC-Korrelators eingeleitet. Ist das gefundene Flag ein SYNC-Flag, so geht er in den Zustand 3 ("Beide synchron") über. Dabei wird durch die Zustandsmaschinene das Richtigsetzen der Blockgrenzen ("Blockbilder Empfänger") eingeleitet. Das heißt, beim "Blockbilder Empfänger" wird das Übernehmen der Blockgrenzeninformation des SYNC-Korrelators eingeleitet. Im Zustand 2 ("Synchron und Gegenseite asynchron") wird nun das SYNC-Flag zur Gegenseite gesendet. Das heißt, der "Blocksynchrone Schalter" bekommt ein entsprechende Information zur Auswahl des SYNC-Flags. Wird in diesem Zustand kein ASYNC-Flag mehr empfangen, so bedeutet dies, daß die Gegenseite synchron ist. Die Zustandsmaschine geht in den Zustand 3 ("Beide synchron") über. Bei diesem Übergang muß der "Blockbilder Empfänger" nicht mehr gesetzt werden, da die Blockgrenzen im Zustand 2 ("Synchron und Gegenseite asynchron") schon richtig standen.
      Im Zustand 3 ("Beide synchron") werden nun die codierten Daten gesendet. Das heißt, der "Blocksynchrone Schalter bekommt eine Information zur Auswahl der Daten vom Blockbilder. Aus diesem Zustand kommt man nur durch einen Reset in den Zustand 1 zurück. Die Zustandsmaschine kann durch einen Reset aus jedem der 3 Zustände in den Ausgangszustand 1 ("Asynchron") gesetzt werden.
   Reset-Eingang: Reset-Signal für Zustandsmaschine.

## Patentansprüche

1. Verfahren zur Synchronisation von Übertragungseinrichtungen bei einer blockcodierten, bidirektionalen Datenübertragung über in einen bitorientierten Kanal, mit
sende - und empfangsseitig angeordneten Übertragungseinrichtungen,
**dadurch gekennzeichnet,**
**daß** beide Übertragungseinrichtungen zu Beginn der Datenübertragung einen asynchronen Synchronisationszustand einnehmen und jeweils der Gegenseite erste Flags (ASYNC) übermitteln, daß jede der Übertragungseinrichtungen sich zuerst auf die empfangenen ersten Flags (ASYNC) und/oder weitere Flags (SYNC) aufsynchronisieren,
**daß** falls eine der beiden Übertragungseinrichtungen sich erfolgreich aufsynchronisiert hat, der Gegenseite solange die weiteren Flags (SYNC) übermittelt werden, bis von der Gegenseite keine ersten Flags (ASYNC) mehr empfangen werden und somit bei beiden Übertragungseinrichtungen Synchronität erreicht wurde, und daraufhin mit dem Senden der Datenübertragung begonnen wird.

2. Verfahren nach Anspruch 1,
**dadurch gekennzeichnet,**
**daß** die Übertragungseinrichtungen als Blockcodierer und/oder Blockdecodierer aufweisende Codiersysteme ausgebildet sind.
